# EUROPÄISCHE PATENTSCHRIFT

(11) **EP 0 599 901 B1**
(45) Veröffentlichungstag und Bekanntmachung des Hinweises auf die Patenterteilung: **28.06.1995**
(21) Anmeldenummer: 92917013.2
(22) Anmeldetag: 13.08.1992
(51) Int. Cl.: G11B 11/10, G11B 13/04, G11B 7/00, G11B 7/08, G11B 7/12

(54) **OPTISCHE ABTASTVORRICHTUNG**
OPTICAL SCANNING DEVICE
DISPOSITIF DE BALAYAGE OPTIQUE

(30) Priorität: 22.08.1991 DE 4127840
(43) Veröffentlichungstag der Anmeldung: 08.06.1994
(73) Patentinhaber: DEUTSCHE THOMSON-BRANDT GMBH, 78048 Villingen-Schwenningen (DE)
(72) Erfinder: MORIMOTO, Yasuaki, Chiba-ken (JP)
(86) Internationale Anmeldenummer: EP9201850
(87) Internationale Veröffentlichungsnummer: WO9304471

(56) Entgegenhaltungen:
- DE-A- 3 732 875
- Patent Abstracts of Japan, unexamined applications, P Sektion, Band 7, Nr. 160,14. Juli 1983, The Patent Office Japanese Government,see page 45 P 210, Kokai-no. 58-68 250
- Patent Abstracts of Japan, unexamined applications, P Sektion, Band 8, Nr. 254,21. November 1984, The Patent Office Japanese Government, see page 1 P 315, Kokai-no. 59-124 044

## Beschreibung

Die Erfindung betrifft eine optische Abtastvorrichtung, die sowohl zum Lesen eines optischen als auch eines magneto-optischen Aufzeichnungsträgers sowie eines magneto-optischen Aufzeichnungsträgers geeignet ist, auf dem Daten übereinander sowohl in einer magnetischen Schicht als auch mittels sogenannter Pits gespeichert sind, wobei der Lichtstrahl einer Lichtquelle auf den Aufzeichnungsträger fokussiert und vom Aufzeichnungsträger einen Polarisationsstrahlteiler durchstrahlend auf einen ersten Photdetektor und vom Polarisationsstrahlteiler abgelenkt auf einen zweiten Photodetektor reflektiert wird, wobei der Ausgang des ersten und des zweiten Photodetektors mit den Eingängen eines Additionsverstärkers verbunden sind, an dessen Ausgang das mittels der Pits gewonnene Datensignal abnehmbar ist, wobei die Ausgänge des ersten und zweiten Photodetektors mit den Eingängen eines Differenzverstärkers verbunden sind, dessen Ausgang mit dem Eingang eines Tiefpaßes verbunden ist und wobei am Ausgang des Tiefpaßes das aus der magnetischen Schicht gewonnene Datensignal abnehmbar ist.

Ein bekannter optischer Aufzeichnungsträger ist z.B. die CD-Platte, bei der auf die lichtdurchlässige Schicht eine lichtreflektierende Aluminiumschicht folgt. Die lichtreflektierende Aluminiumschicht weist Vertiefungen, sogenannte Pits, auf, welche die auf der CD-Platte gespeicherten Daten darstellen. Mittels einer optischen Abtastvorrichtung sind die Daten von der CD-Platte lesbar, weil das Reflexionsverhalten der lichtreflektierenden Aluminiumschicht von dem Muster abhängt, das die Vertiefungen auf der Platte bilden. Von einer Vertiefung, häufig auch groove genannt, wird weniger Licht reflektiert als von einem Hügel, der oft auch als land bezeichnet wird.

An der Intensität des von der CD-Platte reflektierten Lichts erkennt daher die optische Abtastvorrichtung, ob es sich bei dem abgetasteten Bit z.B. um eine logische Eins oder eine logische Null handelt.

Ein weiterer derartiger optischer Aufzeichnungsträger, unter der Bezeichnung magneto-optische Platte bekannt, ist in dem Aufsatz "Magnetooptische Versuche dauern an" in Funkschau 13, 20. Juni 1986, auf Seite 37 - 41 beschrieben.

Im Gegensatz zu einer herkömmlichen CD-Platte weist eine magneto-optische Platte keine Pits auf. Hinter der lichtdurchlässigen Schicht befindet sich eine magnetische Schicht, in die Daten aufzeichenbar und von der Daten lesbar sind. Es wird zunächst erläutert, wie Daten auf eine magneto-optische Platte geschrieben werden.

Mittels eines auf die Platte fokussierten Laserstrahls wird die magnetische Schicht über die Curie-Temperatur erhitzt.

Meist genügt es jedoch, die magnetische Schicht nur bis zu der etwas unterhalb der Curie-Temperatur liegenden Kompensationstemperatur zu erwärmen. Hinter dem Brennpunkt auf der Platte ist ein Elektromagnet angeordnet, der den vom Laserstrahl erhitzten Bereich in die eine oder andere Magnetisierungsrichtung magnetisiert. Weil nach Abschalten des Laserstrahls die erhitzte Stelle wieder unter die Curie-Temperatur abkühlt, bleibt die vom Elektromagneten festgelegte Magnetisierungsrichtung erhalten; sie friert sozusagen ein. Auf diese Weise werden die einzelnen Bits in Domänen unterschiedlicher Magnetisierungsrichtung gespeichert. Dabei entspricht z.B. die eine Magnetisierungsrichtung einer Domäne einer logischen Eins, während die entgegengesetzte Magnetisierungsrichtung eine logische Null darstellt.

Zum Lesen der Daten macht man sich den Kerr-Effekt zunutze. Die Polarisationsebene eines linear polarisierten Lichtstrahls wird bei der Reflexion an einem magnetisierten Spiegel um einen meßbaren Winkel gedreht. Je nachdem, in welche Richtung der Spiegel magnetisiert ist, wird die Polarisationsebene des reflektierten Lichtstrahls nach rechts oder nach links gedreht. Weil aber die einzelnen Domänen auf der Platte wie magnetisierte Spiegel wirken, wird die Polarisationsebene eines abtastenden Lichtstrahls je nach der Magnetisierungsrichtung der gerade abgetasteten Domäne um einen meßbaren Winkel nach links oder rechts gedreht.

An der Drehung der Polarisationsebene des von der Platte reflektierten Lichtstrahls erkennt die optische Abtastvorrichtung, welches Bit vorliegt, eine logische Eins oder eine logische Null. Im Gegensatz zu einer CD-Platte mit Pits ist eine magneto-optische Platte nahezu beliebig oft lösch- und wieder beschreibbar.

Aus der DE-OS 37 32 875 ist ein plattenförmiger Aufzeichnungsträger bekannt, der eine Kombination aus einer optischen und einer magneto-optischen Platte darstellt. Auf diesem Aufzeichnungsträger sind sowohl Daten mittels Pits als auch in der magnetischen Schicht der Platte gespeichert. Weil die Pits und die magnetischen Domänen übereinander liegen, sind an ein und derselben Stelle sowohl Daten in Form von Pits als auch in der magnetischen Schicht gespeichert. Das Speichervermögen dieser Platte ist daher doppelt so groß wie das einer normalen optischen Platte oder einer magneto-optischen Platte.

In der DE-OS 37 32 874 ist eine optische Abtastvorrichtung erläutert, die für die drei angeführten Plattentypen geeignet ist, denn diese optische Abtastvorrichtung vermag sowohl Daten von einer optischen Platte, z.B. einer Compact-Disc, einer magneto-optischen Platte als auch von einer Platte lesen, die aus der DE-OS 37 32 875 bekannt ist.

Bei dieser optischen Abtastvorrichtung wird das Licht eines Lasers auf die Platte fokussiert und von dort zu einem Polarisationsstrahlteiler reflektiert, der es in Abhängigkeit von seiner Polarisationsrichtung entweder auf einen ersten oder einen zweiten Photodetektor reflektiert. Aus der Differenz der Photospannungen des ersten und des zweiten Photodetektors wird das Datensignal gewonnen, das in den magnetischen Domänen der Platte gespeichert ist. Aus der Summe der Photospannungen des ersten und des zweiten Photodetektors wird dasjenige Datensignal erzeugt, das die mittels der Pits auf der Platte gespeicherten Daten wiedergibt. Die in der DE-OS 37 32 874 beschriebene optische Abtastvorrichtung kann bei einer Platte, wie sie in der DE-OS 37 32 875 angegeben ist, gleichzeitig sowohl die mittels der Pits als auch die in den magnetischen Domänen gespeicherten Daten lesen.

Weil aber die Pits ebenfalls eine -wenn auch nur sehr geringe - Drehung der Polarisationsrichtung des vom Laser abgestrahlten Lichts verursachen, Läßt sich Nebensprechen zuischen dem durch Abtasten der Pits gewonnenen Datensignal und dem mit Hilfe des Kerr-Effektes aus den magnetischen Domänen gelesenen Datensignals nicht vollständig vermeiden. Um dieses Nebensprechen genügend zu dämpfen, müssen Mindestabstände zwischen den einzelnen Datenspuren sowie eine Mindestlänge und Mindestbreite der Pits eingehalten werden. Diese Mindestgrößen beschränken aber die Speicherkapazität des Aufzeichnungsträgers.

Es ist deshalb Aufgabe der Erfindung, das unerwünschte Nebensprechen möglichst vollständig zu unterdrücken.

Die Erfindung löst diese Aufgabe dadurch, daß im Strahlengang des von der Lichtquelle ausgesendeten Lichtes ein elektro-optischer Polarisationsmodulator liegt, der den elektrischen Vektor des auf den Aufzeichnungsträger fokussierten Lichtes abwechselnd periodisch parallel und senkrecht zu der abgetasteten Datenspur des Aufzeichnungsträgers mit einer Frequenz kippt, die wesentlich größer gewählt ist als die Frequenz der auf dem Aufzeichnungsträger aufgezeichneten Signale.

Es zeigen
- Figur 1: ein Ausführungsbeispiel der Erfindung;
- Figur 2: die Lage des elektrischen Vektors auf der Datenspur des Aufzeichnungsträger;
- Figur 3: das den opto-elektrischen Modulator steuernde rechteckförmige Steuersignal und die zugehörige Lage des elektrischen Vektors auf der Datenspur;
- Figur 4: die Lichtintensität in den beiden senkrecht aufeinander stehenden Polarisationsebenen in Abhängigkeit vom rechteckförmigen Steuersignal;
- Figur 5: die Richtung des elektrischen Vektors vor und hinter dem elektro-optischen Modulator;
- Figur 6: das Nebensprechen im magnetischen Datensignal.

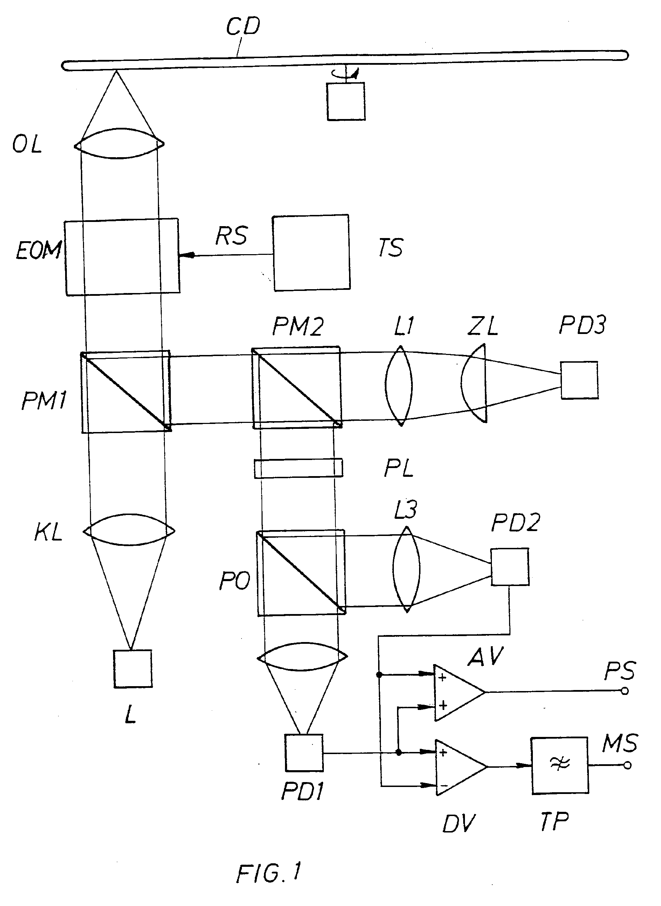

Es wird nun das in Figur 1 abgebildete Ausführungsbeispiel beschrieben und anschließend erläutert.

Das von einer Lichtquelle L, beispielsweise einer Laserdiode, ausgesendete Licht strahlt durch eine Kollimatorlinse KL, einen Prismenstrahlteiler PM1 und einen elektro-optischen Modulator EOM zu einer Objektivlinse OL, welche das Licht auf einen Aufzeichnungsträger CD z.B. eine magneto-optische Platte fokussiert. Von der magneto-optischen Platte CD wird das Licht zurück zur Objektivlinse OL, zum elektro-optischen Modulator EOM und zum Prismenstrahlteiler PM1 reflektiert, der es rechtwinklig zu einem Prismenstrahlteiler PM2 ablenkt. Ein Teil des Lichts durchstrahlt den Prismenstrahlteiler PM2 zu einer Konvexlinse L1 und weiter zu einer Zylinderlinse ZL, die das Licht auf einen Photodetektor PD3 richtet, der als Vierquadrantenphotodetektor aufgebaut ist. Ein Teil des Lichtes lenkt jedoch der Prismenstrahlteiler PM2 rechtwinklig zu einer λ/2-Platte ab, von der das Licht zu einem Polarisationsstrahlteiler PO gelangt. In Abhängigkeit von der Polarisationsrichtung des zum Polarisationsstrahlteiler PO gesendeten Lichtes wird ein Teil geradlinig zu einer Konvexlinse L2 weitergeleitet, die es auf einen Photodetektor PD1 richtet. Der andere Teil des Lichtes wird zu einer Konvexlinse L3 gelenkt, die es auf einen Photodetektor PD2 richtet. Der Ausgang des Photodetektors PD1 und der Ausgang des Photodetektors PD2 sind mit den Eingängen eines Additionsverstärkers AV und eines Differenzverstärkers DV verbunden. Am Ausgang des Additionsverstärkers AV ist das mittels der Pits gewonnene Datensignal PS abnehmbar. Am Ausgang eines Tiefpaßes TP, dessen Eingang mit dem Ausgang des Differenzverstärkers DV verbunden ist, ist das aus der magnetischen Schicht der magneto-optischen Platte CD gewonnene Datensignal MS abnehmbar. Der Steuereingang des elektro-optischen Modulators ist mit dem Ausgang einer Treiberschaltung TS verbunden, die ein rechteckförmiges Steuersignal erzeugt.

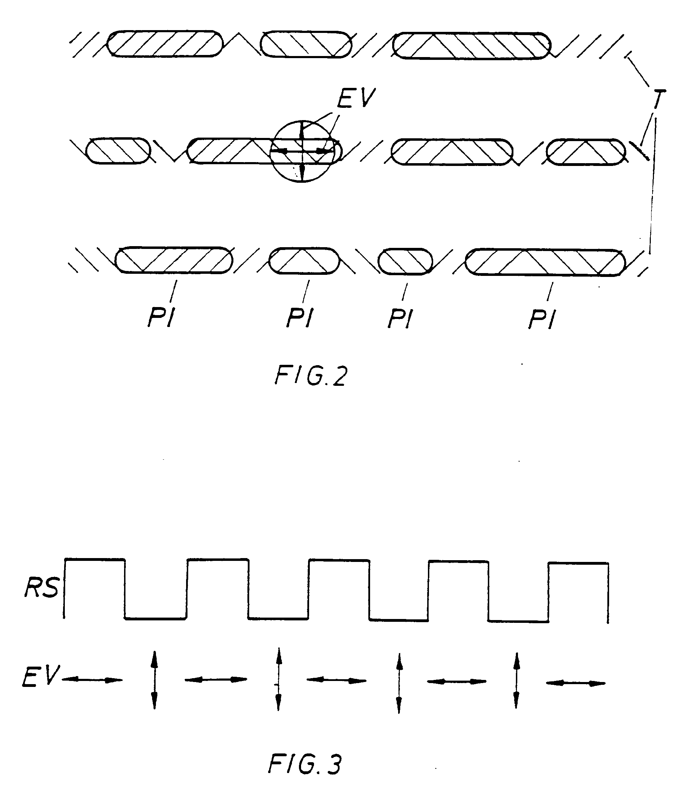

In der Figur 2 sind drei Datenspuren T des Aufzeichnungsträgers mit Pits PI dargestellt. Die Magnetisierungtrichtung der Datenspuren ist durch die unterschiedliche Schraffur angedeutet. Der elektrische Vektor EV des auf die magneto-optische Platte fokussierten Lichtes liegt entweder parallel zur Spurrichtung oder senkrecht zur Spurrichtung.

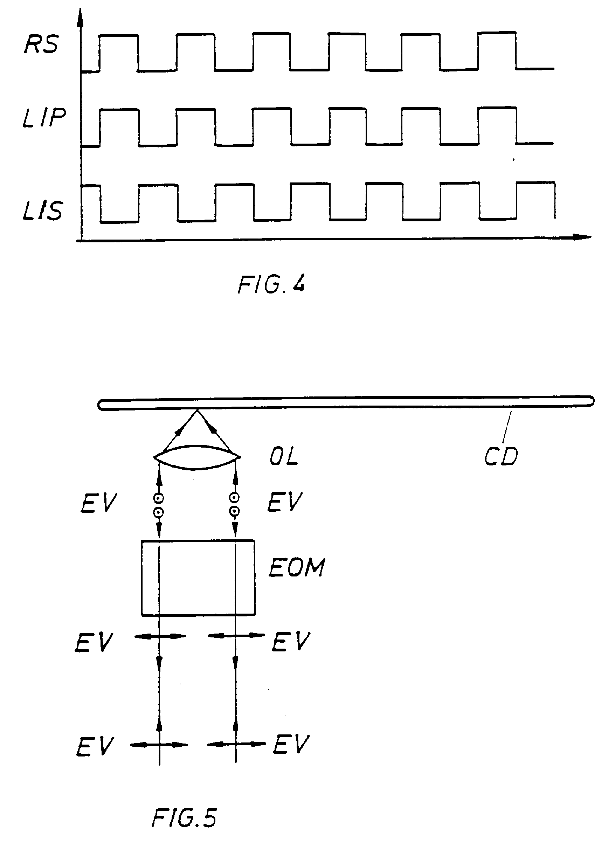

In der Figur 4 ist das von der Treiberschaltung TS erzeugte rechteckförmige Steuersignal RS für den elektro-optischen Modulator gezeigt. Darunter sind die Lichtintensität LIP in Spurrichtung und die Lichtintensität LIS senkrecht zur Spurrichtung gezeigt. Bei einem Impuls des rechteckförmigen Steuersignals RS liegt der elektrische Vektor parallel zur Spurrichtung. Deshalb ist bei einem Impuls des Steuersignals RS die Lichtintensität in Richtung der Datenspur gesehen ebenfalls synchron mit den Rechteckimpulsen des Steuersignals RS.

Während einer Impulspause im Steuersignal RS steht der elektrische Vektor dagegen senkrecht zur Spurrichtung. Deshalb ist die Lichtintensität senkrecht zur Spurrichtung gesehen während der Impulspausen impulsförmig. Die Lichtintensität in Richtung der Datenspur gesehen ist deshalb gegenphasig zur Lichtintensität senkrecht zur Datenspur gesehen.

Zum besseren Verständnis ist in Figur 3 nochmals das rechteckförmige Steuersignal RS der Treiberschaltung TS gezeichnet. Unter dem rechteckförmigen Steuersignal RS ist in der richtigen Reihenfolge die Lage des elektrischen Vektors EV auf der Datenspur gezeigt. Bei einem Impuls liegt der elektrische Vektor EV parallel zur Datenspur, während er bei einer Impulspause senkrecht zur Datenspur steht. Der elektro-optische Modulator EOM kippt den elektrischen Vektor EV periodisch in die parallele und wieder zurück in die senkrechte Lage.

In der Figur 5 ist die Richtung des elektrischen Vektors EV vor und hinter dem elektro-optischen Modulator EOM angedeutet. Der elektro-optische Modulator EOM bewirkt, daß der elektrische Vektor EV des von ihm zur magneto-optischen Platte gerichteten Lichtes abwechselnd parallel und senkrecht zur Datenspur liegt. Dagegen ist der elektrische Vektor EV des von der magneto-optischen Platte reflektierten und den elektro-optischen Modulator EOM durchstrahlenden Lichts stets parallel zum elektrischen Vektor des von der Laserdiode L ausgesendeten Lichtes.

Die Frequenz des von der Treiberschaltung TS erzeugten rechteckförmigen Steuersignales RS ist wesentlich größer gewählt als die Frequenz der von der magneto-optischen Platte CD gelesenen Datensignale PS und MS. Die Frequenz des rechteckförmigen Steuersignals RS beträgt beispielsweise 50 MHz, während die Frequenz des mittels der Pits gewonnenen Datensignals PS und die Frequenz des aus der magnetischen Schicht gewonnenen Datensignals MS bei einem CD-Spieler höchstens 720 KHz beträgt.

Infolge der endlichen Schaltgeschwindigkeit des elektro-optischen Modulators und infolge der endlichen Geschwindigkeit des Lichts hat sich aber der elektrische Vektor des vom elektro-optischen Modulator ausgesendeten Lichts ein Stück weiter gedreht, wenn das von der magneto-optischen Platte reflektierte Licht beim elektro-optischen Modulator ankommt. Weil deshalb die elektrischen Vektoren des vom elektro-optischen Modulator ausgesendeten Lichtes und des von der magneto-optischen Platte zurück zum elektro-optischen Modulator reflektierten Lichtes nicht genau parallel sind, während der elektrische Vektor EV in die andere Lage kippt, wird während des Kippens des elektrischen Vektors EV elliptisch polarisiertes Licht erzeugt, dessen störende Wirkung aber vernachlässigbar ist.

Die Erfindung geht nun von der ersten Erkenntnis aus, daß das Nebensprechen im magneto-optischen Datensignal MS von einer unerwünschten Drehung der Polarisationsebene durch Reflexion an den Kanten der Pits verursacht wird. Ferner geht die Erfindung von der zweiten Erkenntnis aus, daß bei parallel zur Spurrichtung verlaufendem elektrischen Vektor die Amplituden der Nebensprechprodukte etwa gleich groß aber von entgegengesetzter Polarität sind wie bei senkrecht zur Spurrichtung stehendem elektrischen Vektor.

Weil nun die Rotationsfrequenz des elektrischen Vektors wesentlich größer gewählt ist als die Frequenz der Datensignale, wird jedes Pits mehrmals mit zur Spurrichtung parallelem und mit zur Spurrichtung senkrechtem elektrischen Vektor abgetastet. Weil außerdem die Nebensprechprodukte bei zur Spurrichtung parallelem elektrischen Vektor etwa gleichen Betrag aber entgegengesetzte Polarität wie bei senkrecht zur Spurrichtung stehendem elektrischen Vektor haben, löschen sie sich gegenseitig weitestgehend aus. Mit anderen Worten bedeutet dies, daß das zu den Photodetektoren PD1 und PD2 reflektierte Licht nahezu frei von Nebensprechen ist, weil sich die Nebensprechprodukte, die bei parallel zur Spurrichtung verlaufendem elektrischen Vektor erzeugt werden und die Nebensprechprodukte, die bei senkrecht zur Spurrichtung stehendem elektrischen Vektor erzeugt werden, gegenseitig auslöschen.

Der Tiefpaß am Ausgang des Differenzverstärkers DV ist erforderlich, um die Frequenzanteile, die von dem rechteckförmigen Steuersignal RS erzeugt werden, aus dem magneto-optischen Datensignal MS heraus zu filtern.

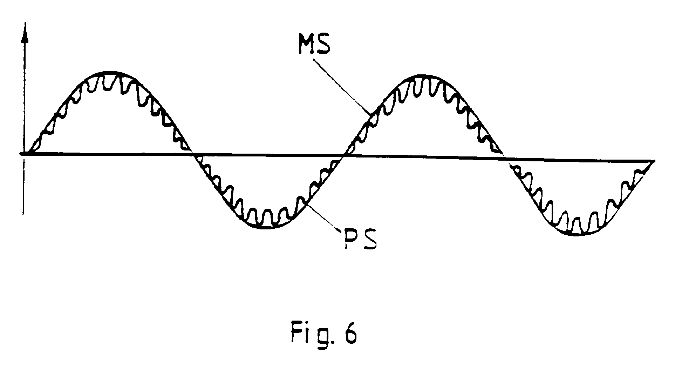

In Figur 6 ist das aus den in der magnetischen Schicht des Aufzeichnungsträgers gespeicherten Daten gewonnene Datensignal MS gezeigt, dessen Frequenz z.B. 10 KHz betragen möge. Das Datensignal MS ist aber von einer Schwingung mit z.B. 100 KHz überlagert, die von dem Datensignal verursacht wird, das aus den mittels der Pits gespeicherten Daten gewonnen wird. Die Amplituden der überlagerten Schwingung von 100 KHz werden durch die periodische Drehung des elektrischen Vektors und infolge des Tiefpasses TP am Ausgang des Differenzverstärkers DV erheblich verkleinert.

Die Erfindung ist für ein optisches Aufzeichnungs- und/oder Wiedergabegerät geeignet, das sowohl optische als auch magneto-optische Aufzeichnungsträger als auch eine Kombination von beiden lesen kann. Die Erfindung läßt sich vorteilhaft in der Datenverarbeitung einsetzen, weil gleichzeitig Daten gelesen und aufgezeichnet werden können. Aber auch bei CD-Spielern und Videoplattenspielern bietet die Erfindung z.B. den Vorteil, daß gleichzeitig mit der Wiedergabe auch Ton und Bild aufgenommen werden können.

## Patentansprüche

1. Optische Abtastvorrichtung, die sowohl zum Lesen eines optischen als auch eines magneto-optischen Aufzeichnungsträgers sowie eines magneto-optischen Aufzeichnungsträgers (CD) geeignet ist, auf dem Daten übereinander sowohl in einer magnetischen Schicht als auch mittels sogenannter Pits (PI) gespeichert sind, wobei der Lichtstrahl einer Lichtquelle (L) auf den Aufzeichnungsträger (CD) fokussiert wird und vom Aufzeichnungsträger (CD) einen Polarisationsstrahlteiler (PO) durchstrahlend auf einen ersten Photodetektor (PD1) und vom Polarisationsstrahlteiler (PO) abgelenkt auf einen zweiten Photodetektor (PD2) reflektiert wird, wobei der Ausgang des ersten und des zweiten Photodetektors (PD1, PD2) mit den Eingängen eines Additionsverstärkers (AV) verbunden sind, an dessen Ausgang das mittels der Pits gewonnene Datensignal (PS) abnehmbar ist, wobei die Ausgänge des ersten und zweiten Photodetektors (PD1, PD2) mit den Eingängen eines Differenzverstärkers (DV) verbunden sind, dessen Ausgang mit dem Eingang eines Tiefpaßes (TP) verbunden ist und wobei am Ausgang des Tiefpaßes (TP) das aus der magnetischen Schicht gewonnene Datensignal abnehmbar ist, **dadurch gekennzeichnet,** daß im Strahlengang des von der Lichtquelle (L) ausgesendeten Lichtes ein elektro-optischer Polarisationsmodulator (EOM) liegt, der den elektrischen Vektor des auf den Aufzeichnungsträger (CD) fokussierten Lichtes abwechselnd periodisch parallel und senkrecht zu der abgetasteten Datenspur des Aufzeichnungsträgers (CD) mit einer Frequenz kippt, die wesentlich größer gewählt ist als die Frequenz der auf dem Aufzeichnungsträger (CD) aufgezeichneten Signale.

2. Optische Abtastvorrichtung nach Anspruch 1, **dadurch gekennzeichnet,** daß der elektrooptische Polarisationsmodulator (EOM) von einer Treiberschaltung (TS) mit einem Steuersignal (RS) so angesteuert wird, daß der elektrische Vektor (EV) des auf den Aufzeichnungsträger (CD) fokussierten Lichts abwechselnd periodisch parallel und senkrecht zu der abgetasteten Datenspur des Aufzeichnungsträgers (CD) liegt.

3. Optische Abtastvorrichtung nach Anspruch 2, **dadurch gekennzeichnet,** daß das Steuersignal (RS) ein rechteckförmiges Impulssignal ist.

4. Optische Abtastvorrichtung nach Anspruch 3, **dadurch gekennzeichnet,** daß das Tastverhältnis des rechteckförmigen Steuersignals (RS) 1:1 beträgt.

5. Optische Abtastvorrichtung nach Anspruch 3 oder 4, **dadurch gekennzeichnet,** daß die Frequenz des rechteckförmigen Steuersignals (RS) wesentlich größer gewählt ist als die Frequenz der auf dem Aufzeichnungsträger (CD) aufgezeichneten Signale.

6. Optische Abtastvorrichtung nach Anspruch 1, 2, 3, 4 oder 5, **dadurch gekennzeichnet,** daß das von der Lichtquelle (L) erzeugte Licht eine Kollimatorlinse (KL), einen ersten Prismenstrahlteiler (PM1), den elektro-optischen Modulator (EOM) und eine Objektivlinse (OL) durchstrahlt, die den Lichtstrahl auf den Aufzeichnungsträger (CD) fokussiert, daß der Aufzeichnungsträger (CD) den Lichtstrahl die Objektivlinse (OL) und den elektro-optischen Modulator (EOM) durchstrahlend zurück zum ersten Prismenstrahlteiler (PM1) reflektiert, der das Licht zu einem zweiten Prismenstrahlteiler (PM2) ablenkt, daß ein Teil des Lichtes den zweiten Prismenstrahlteiler (PM2) geradlinig durchstrahlt und über eine Konvexlinse (L1) und eine Zylinderlinse (ZL) auf einen dritten Photodetektor (PD3) strahlt, daß ein Teil des Lichtes vom zweiten Prismenstrahlteiler (PM2) eine 2/2-Platte (PL), einen Polarisationsstrahlteiler (PO) und eine zweite Konvexlinse (L2) durchstrahlend auf den ersten Photodetektor (PD1) gerichtet wird, daß der Polarisationssttahlteiler (P0) ein Teil des Lichts eine dritte Konvexlinse (L3) durchstrahlend auf den zweiten Photodetektor richtet, daß die Ausgänge des ersten und zweiten Photodetektors (PD1, PD2) mit den Eingängen des Additionsverstärkers (AV) und mit den Eingängen des Differenzverstärkers (DV) verbunden sind, an dessen Ausgang der Tiefpaß (TP) angeschlossen ist, daß am Ausgang des Additionsverstärkers (AV) das aus den Pits gewonnene Datensignal (PS) und am Ausgang des Tiefpaßes (TP) das aus der magnetischen Schicht gewonnene Datensignal (MS) abnehmbar sind.

7. Optische Abtastvorrichtung nach Anspruch 6, **dadurch gekennzeichnet,** daß der dritte Photodetektor (PD3) als Vierquadrantenphotodetektor aus vier Photodioden (A, B, C, D) aufgebaut ist.

8. Optische Abtastvorrichtung nach Anspruch 7, **dadurch gekennzeichnet,** daß aus den Ausgangssignalen des dritten Photodetektors (PD3) das Fokusfehlersignal zur Fokussierung des Lichtstrahls auf den Aufzeichnungsträger (CD) erzeugt wird.

## Claims

1. Optical scanning device which is suitable for reading both an optical and a magneto-optical recording medium as well as a magneto-optical recording medium (CD), on which data are stored one above the other both in a magnetic layer and by means of so-called pits (PI), the light beam of a light source (L) being focused onto the recording medium (CD) and is reflected by the recording medium (CD), passing through a polarization beam splitter (P0), onto a first photodetector (PD1) and, deflected by the polarization beam splitter (P0), is reflected onto a second photodetector (PD2), the output of the first photodetector (PD1) and of the second photodetector (PD2) being connected to the inputs of a summing amplifier (AV) at whose output that data signal (PS) which is obtained by means of the pits can be picked off, the outputs of the first photodetector (PD1) and of the second photodetector (PD2) being connected to the inputs of a differential amplifier (DV) whose output is connected to the input of a low-pass filter (TP), and it being possible to pick off the data signal obtained from the magnetic layer at the output of the low-pass filter (TP), characterized in that an electrooptical polarization modulator (EOM) is located in the beam path of the light transmitted from the light source (L), which polarization modulator (EOM) rotates the electrical vector of the light focused onto the recording medium (CD) alternately and periodically parallel to and at right angles to the scanned data track of the recording medium (CD), at a frequency which is selected to be significantly greater than the frequency of the signals recorded on the recording medium (CD).

2. Optical scanning device in accordance with Claim 1, characterised in that, the electro-optic polarisation modulator (EOM) is controlled by a driver circuit (TS) with a control signal (RS) in such a way that the electric vector (EV) of the light focused on the recording medium (CD) periodically lies alternately parallel and perpendicular to the scanned data track of the recording medium (CD).

3. Optical scanning device in accordance with Claim 2, characterised in that, the control signal (RS) is a rectangular pulse signal.

4. Optical scanning device in accordance with Claim 3, characterised in that, the duty cycle of the rectangular control signal (RS) amounts to 1:1.

5. Optical scanning device in accordance with Claim 3 or 4, characterised in that, the frequency of the rectangular control signal (RS) is selected to be substantially greater than the frequency of the signals recorded on the recording medium (CD).

6. Optical scanning device in accordance with Claim 1, 2, 3, 4 or 5, characterised in that, the light produced by the light source (L) passes through a collimating lens (KL), a first prismatic beam splitter (PM1), the electro-optic modulator (EOM) and an objective lens (OL) which focuses the light beam onto the recording medium (CD), that the recording medium (CD) reflects the light beam back through the objective lens (OL) and the electro-optic modulator (EOM) to the first prismatic beam splitter (PM1) which deflects the light to a second prismatic beam splitter (PM2), that a portion of the light passes in a straight line through the second prismatic beam splitter (PM2) and shines via a convex lens (L1) and a cylindrical lens (ZL) onto a third photodetector (PD3), that a portion of the light is directed by the second prismatic beam splitter (PM2) through a λ/2 plate (PL), a polarisation beam splitter (P0) and a second convex lens (L2) onto the first photodetector (PD1), that the polarisation beam splitter (PO) directs a portion of the light through a third convex lens (L3) onto the second photodetector, that the outputs of the first and second photodetector (PD1, PD2) are connected to the inputs of the summing amplifier (AV) and to the inputs of the differential amplifier (DV) to whose output the low pass filter (TP) is connected, that the data signal (PS) obtained from the pits is derivable from the output of the summing amplifier (AV) and that the data signal (MS) obtained from the magnetic layer is derivable at the output of the low pass filter (TP).

7. Optical scanning device in accordance with Claim 6, characterised in that, the third photodetector (PD3) is built-up from four photodiode (A, B, C, D) as a four quadrant photodetector.

8. Optical scanning device in accordance with Claim 7, characterised in that, the focusing error signal for focusing the light beam onto the recording medium (CD) is generated in known manner from the output signals of the third photodetector (PD3).

## Revendications

1. Dispositif de balayage optique approprié pour la lecture tant d'un support d'enregistrement optique que d'un support d'enregistrement magnéto-optique, ainsi que d'un support d'enregistrement magnéto-optique (CD) où les informations sont enregistrées l'une sur l'autre soit dans une couche magnétique soit au moyen de "pits" (PI), le faisceau lumineux produit par une source d'éclairage (L) étant d'abord focalisé sur ledit support d'enregistrement (CD), puis, en passant à travers un séparateur de faisceau de polarisation (PO), réfléchi depuis ledit support d'enregistrement vers un premier photodétecteur (PD1), et étant ensuite diffracté par ledit séparateur de faisceau de polarisation (PO) pour être réfléchi vers un deuxième photodétecteur (PD2). Les sorties respectives du premier et du deuxième photodétecteur (PD1, PD2) sont connectées aux entrées d'un amplificateur additif (AV) dont la sortie fournit le signal porteur d'informations (PS) produit à partir des pits les sorties des premier et deuxième photodétecteurs (PD1, PD2) étant en outre reliées aux entrées d'un amplificateur différenciateur (DV) dont la sortie est connectée à l'entrée d'un filtre passe-bas (TP), la sortie de ce dernier fournissant le signal porteur d'informations produit à partir de la couche magnétique dispositif **caractérisé en ce** qu'un modulateur de polarisation électro-optique (EOM), placé dans le trajet du faisceau émis par la source d'éclairage (L), renverse alternativement le vecteur électrique du faisceau lumineux focalisé sur le support d'enregistrement (CD) de telle manière que celui-ci se trouve périodiquement parallèle et perpendiculaire par rapport à la piste balayée dudit support d'enregistrement (CD), et ce à une fréquence qui est nettement supérieure à celle des signaux enregistrés sur le support d'enregistrement (CD).

2. Dispositif de balayage optique selon la revendication 1 **caractérisé en ce** que ledit modulateur électro-optique (EOM) est commandé à l'aide d'un signal de commande (RS) généré par un circuit excitateur (TS) de telle manière que le vecteur électrique (EV) du faisceau lumineux focalisé sur ledit support d'enregistrement (CD) soit orienté alternativement et périodiquement dans le sens parallèle et dans le sens perpendiculaire par rapport à la piste balayée du support d'enregistrement (CD).

3. Dispositif de balayage optique selon la revendication 2 **caractérisé en ce** que ledit signal de commande (RS) est un signal pulsé de forme carré.

4. Dispositif de balayage optique selon la revendication 3 **caractérisé en ce** que le taux d'impulsions dudit signal de commande carré (RS) est de l'ordre de 1:1.

5. Dispositif de balayage optique selon l'une quelconque des revendications 3 ou 4 **caractérisé en ce** que la fréquence du signal de commande carré (RS) est nettement supérieure à la fréquence des signaux enregistrés sur le support d'enregistrement (CD.

6. Dispositif de balayage optique selon l'une quelconque des revendications 1, 2, 3, 4 ou 5 **caractérisé en ce** que le faisceau lumineux émis par la source d'éclairage (L) traverse une lentille de collimation (KL), un premier séparateur de faisceau à prismes (PM1), le modulateur électro-optique (EOM) et la lentille de l'objectif (OL) qui focalise le faisceau sur le support d'enregistrement (CD), **caractérisé en outre en ce** que ledit support d'enregistrement (CD) reflète ledit faisceau lumineux, par transmission à travers la lentille de l'objectif (OL) et le modulateur électro-optique (EOM), sur le premier séparateur de faisceau à prismes (PM1) qui, lui, diffracte la lumière vers un deuxième séparateur de faisceau à prismes (PM2), **caractérisé également en ce** qu'une portion de la lumière est transmise linéairement à travers ledit deuxième séparateur de faisceau à prismes (PM2) pour tomber ensuite sur un troisième photodétecteur (PD3) après avoir traversé une lentille convexe (L1) et une lentille cylindrique (ZL), qu'une portion de la lumière provenant dudit deuxième séparateur de faisceau à prismes (PM2) est transmise à travers une plaque λ/2 (PL), un séparateur de faisceau de polarisation (PO) et une deuxième lentille convexe (L2), pour être dirigée sur le premier photodétecteur (PD1), **caractérisé en** **outre en ce** que le séparateur de faisceau de polarisation (PO) dirige une portion de la lumière, transmise à travers une troisième lentille convexe (L3), sur le deuxième photodétecteur, que les sorties des premier et deuxième photodétecteurs (PD1, PD2) sont connectées aux entrées de l'amplificateur additif (AV) et à celles de l'amplificateur différenciateur (DV) à la sortie duquel se trouve connecté le filtre passe-bas (TP), et **caractérisé enfin en ce** que la sortie dudit amplificateur additif (AV) fournit le signal porteur d'informations (PS) produit à partir des pits et que la sortie du filtre passe-bas (TP) fournit le signal porteur d'informations (MS) produit à partir de la couche magnétique.

7. Dispositif de balayage optique selon la revendication 6 **caractérisé en ce** que le troisième photodétecteur (PD3) est conçu sous la forme d'un photodétecteur à quatre quadrants composé de quatre photodiodes (A, B, C, D).

8. Dispositif de balayage optique selon la revendication 7 **caractérisé en ce** les signaux de sortie dudit troisième photodétecteur (PD3) servent à générer le signal d'erreur de focalisation permettant de focaliser le faisceau lumineux sur le support d'enregistrement (CD).
